# EUROPEAN PATENT SPECIFICATION

(11) **EP 1 724 511 B1**
(45) Date of publication and mention of the grant of the patent: **07.03.2012**
(21) Application number: 06012808.9
(22) Date of filing: 06.04.2001
(51) Int. Cl.: F16L 37/14, F16L 37/084, F16L 33/00, F16L 33/30

(54) **Quick connector with a retainer**
Schnellverbinder mit Halteelement
Raccord rapide avec pièce de maintien

(30) Priority: 06.04.2000 US 194938 P; 27.12.2000 US 748959
(43) Date of publication of application: 22.11.2006
(62) Divisional of application: 01924782.4
(73) Proprietor: ITT Manufacturing Enterprises, Inc., Wilmington, Delaware 19801 (US)
(72) Inventor: Andre, Michael J., 48146 Lincoln Park (US); Szabo, George, Ortonville, MI 48462 (US)
(74) Representative: Steimle, Josef

(56) References cited:
- DE-A1- 4 005 474
- GB-A- 2 087 021
- US-A- 5 076 615
- US-A- 5 405 175

## Description

The present invention relates, in general, to fluid quick connector assemblies which couple male and female connector components and, more specifically, to fluid quick connectors having a retainer which locks the male connector component in the female connector component.

Snap-fit or quick connectors are employed in a wide range of applications, particularly, for joining fluid carrying conduits in automotive and industrial application. In a typical quick connector with an axially displaceable retainer, the retainer is fixedly mounted within a bore in a housing of a female connector component or element. The retainer has a plurality of radially and angularly extending legs which extend inwardly toward the axial center line of the bore in the housing. A tube or male fitting to be sealingly mounted in the bore in the female component includes a radially upset portion or flange which abuts an inner peripheral surface of the retainer legs. Seal and spacer members as well as a bearing or top hat are typically mounted in the bore ahead of the retainer to form a seal between the housing and the male fitting when the male fitting is lockingly engaged with the retainer legs.

Radially displaceable retainers in which the retainer is radially displaceable through aligned bores or apertures formed transversely to the main through bore in the female component or housing are also known. The radially displaceable retainer is typically provided with a pair of depending legs which are sized and positioned to slip behind the radially upset portion or flange on the male conduit only when the male connector or conduit is fully seated in the bore in the female connector. This ensures a positive locking engagement of the conduit with the female connector as well as providing an indication that the conduit is fully seated since the radially displaceable retainer can be fully inserted into the female connector only when the conduit has been fully inserted into the bore in the female connector.

Regardless of the type of retainer, the female housing or component portion of a fluid connector typically includes an elongated stem having one or more annular barbs spaced from a first end. The barbs provide secure engagement with a hose or conduit which is forced over the barbs to connect the female housing with one end of the conduit.

Due to the secure engagement between the conduit and the female component, the open end of the axial through bore in the female connector portion of a fluid connector designed with an axially displaceable retainer or the transverse bores in a female connector designed to receive a radially displaceable retainer are fixed in one circumferential position depending upon the position of the tubing and the female connector when the tubing and female connector are joined together. In certain applications, this could limit accessibility to and make it difficult to insert the retainer into the female component, particularly in the case of a radial retainer. Interference with surrounding components frequently makes access to the quick connector for both locking or unlocking operations difficult, if not impossible.

GB-A-2 087 021 discloses a swivellable quick connector for use with tubular conduits. The male component is held by two projections. This is not secure enough and does not prevent any axial disengagement of the tubular conduit. US-A-5 405 175 discloses a clip attachment of a fuel tube to a fuel rail. The holding element is a U-shaped clip, which does not prevent any axial disengagement of the tubular conduit.

Thus, it would be desirable to provide a fluid quick connector which overcomes the problems of previously devised quick connectors with respect to ease of insertion of the retainer into the quick connector while still providing all of the required attributes of a fluid quick connecter in terms of sealing and locking engagement between the conduits and the quick connector. It would also be desirable to provide such a fluid quick connector which achieves the aforementioned advantages without requiring significant modification to existing, proven quick connector designs. It would also be desirable to provide a fluid quick connector which is easily rotatable over 360° to facilitate insertion or removal of the retainer into or out of the quick connector.

The present invention is a quick connector having the features of claim 1. Optional further aspects of the invention are subject-matter of the dependent claims.

These quick connectors are manufactured for joining first and second conduits in fluid flow communication in which the retainer receiving portion of the quick connector can be rotated or swivelled over a complete 360° range to facilitate easy access to the retainer or the retainer receiving portion of the quick connector for insertion into or removal of the retainer from the quick connector housing.

In one aspect of the invention, the present quick connector includes a first housing having a through bore with a first bore portion adapted for receiving a first end of a first conduit. Seal elements are mounted in the first bore portion for sealing the first housing to the first end of the first conduit. A second housing is rotatably and non-axially displaceably connected to the first housing. The second housing has a through bore for receiving the first conduit therethrough. A retainer is mountable in the second housing for lockingly coupling the first conduit to the first housing.

In a specific aspect of the invention, the first housing includes an enlarged end flange which is rotatably positioned adjacent an annular shoulder or flange at one end of the second housing, with a major extent of the first housing projecting through the aperture in the one end of the second housing. In one version, the first housing is inserted through the first end of the second housing until the flange engages the shoulder. In another version, the enlarged flange and the end of the first housing are provided with a plurality of slots which allow portions of the end flange and the adjacent portion of the first housing to flex radially inward for insertion through the open second end of the second housing until the enlarged flange snaps radially outward to its nominal diameter after passing the annular shoulder at the end of the second housing.

The first and second housings are held in a rotatable position by means of a rigid member or top hat which is disposed in the bore in the first housing. In one aspect, the top hat includes one or more axially projecting legs having hooks or projections at a distal end which engage apertures formed in the end of the second housing to fixedly latch the top hat to the second housing and rotatably trapping the enlarged flange on the first housing between a flange on the top hat and the shoulder in the second housing. In another aspect, an enlarged flange on the top hat is press fit in locked relationship to the second housing.

In another aspect of the invention, the rigid member or top hat has an annular recess extending from one end which is sized to receive the enlarged flange on the first conduit therein. This places the first conduit flange axially ahead of the transverse bore through the second housing thereby enabling the retainer to be formed with generally flat end surfaces which engage the flange on the first conduit to prevent axial separation of the first conduit from the first housing.

In another aspect of the invention, a web is formed in one of the large apertures forming the transverse bore in the housing and divides the large aperture into two smaller apertures each receiving an end portion of one of the side legs of the retainer. The web limits radially inward flexing of the end portion of the side legs of the retainer during removal of the retainer to prevent damage to the retainer caused by excessive flexing. At the same time, the web does not interfere with the normal insertion and operation of the retainer.

In another aspect of the invention, usable with the present dual housing assembly or a single housing, the tip end of one housing is formed with a plurality of radially outward extending projections or ribs which forcibly engage the inner surface of the flexible conduit mounted thereover. The projections prevent rotation between the flexible conduit and the housing which could lead to the formation of leakage paths between the flexible conduit and the housing and/or separation of the flexible conduit from the housing..

In another aspect, a cap is mounted on the tip end of the housing to facilitate a smooth connection of the tip end of the housing and the flexible conduit. The cap includes a cooperating projection and recess formed within the interior of the bore of the cap and on the tip end of the housing to snap mount the cap on the housing.

The rotatable quick connector of the present invention overcomes a disadvantage frequently encountered with previously designed quick connectors incorporating a releasably mountable retainer wherein the use position of the quick connector may be adjacent to another component to hereby limiting access for insertion or removal of the retainer in the housing. The quick connector of the present invention uniquely provides a rotatable quick connector housing assembly which enables the retainer receiving housing of the quick connector to be rotated over a full 360° range to facilitate easy access to the retainer mounted in the rotatable housing. However, at the same time, the quick connector with rotatable features maintains all of the functions and advantages of a standard quick connector in terms of easy insertion of a conduit therein and high pullout forces locking the conduit in the quick connector.

The quick connector of the present invention also provides other advantages over previously devised quick connectors. The top hat mounted in the housing assembly is also usable in a conventional quick connector with a single housing and includes an annular recess at one end for receiving the enlarged flange on the conduit. This enables the retainer to be simply formed with generally flat ends on the side legs for insertion through the transverse bore in the female component housing and engagement with the enlarged flange on the conduit.

The various features, advantages and other uses of the present invention will become more apparent by referring to the following detailed discussion and drawing in which:
- Fig. 1: is a perspective view of a rotatable quick connector according to the present invention shown in an assembled state;
- Fig. 2: is an exploded perspective view of the rotatable quick connector shown in Fig. 1;
- Fig. 3: is a longitudinal, cross-sectional, perspective view of the assembled quick connector shown in Fig. 1;
- Fig. 4: is a perspective view of the rotatable quick connector of Fig. 1 shown in a shipping state;
- Fig. 5: is a bottom view of the assembled quick connector of Fig. 1; and
- Fig. 6: is a partially cross-sectioned, end view of the assembled quick connector of Fig. 1.

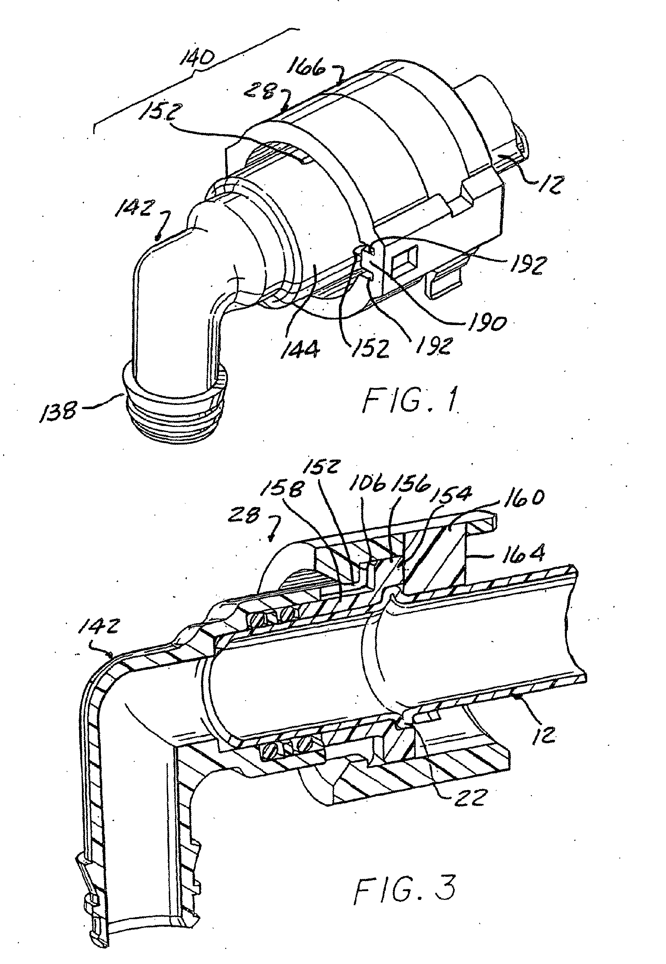

Referring now to Figs. 1 to 4, there is depicted a quick connector 140 constructed according, to the teachings of the present invention. According to the present invention, a first housing 142 has a stepped bore extending therethrough from an enlarged diameter bore portion in an enlarged end portion of the first housing 142, through a second smaller diameter bore portion in an intermediate portion of the first housing 142 to a third yet smaller diameter end portion extending through a third portion 138 of the first housing 142. Although the first housing 142 is illustrated as being in the form of a 90° elbow, it will be understood that the first housing 142 may take any other shape, such as a conventional, axial in-line housing, as well as a 45° elbow, etc. The first bore portion in the first end portion 144 of the first housing 142 receives an O-ring 92, a spacer 94 and an O-ring 96.

The first housing 142 also includes an enlarge diameter end flange 150. At least one and preferably a plurality of circumferentially spaced slots 152 are formed in the first housing 142 through the flange 150 and partially along the length of the first end portion 144. The slots 152 allow radial movement of the flange 150 and the first end portion 144 of the first housing 142 as the first end portion 144 of the first housing 142 is slidably inserted into a second housing 28.

During the connection of the first housing 142 and the second housing 28, the peripheral edge of the flange 152 will first engage the end portion of the bore in the ring member 60 of the second housing 28. This causes a radially inward compression of the flange 152 and the first end portion 144 of the first housing 142 until the flange 152 enters the recess 106 formed in the ring member 60. The flange 152 then snaps radially outward locking the first housing 142 in the second housing 28 and preventing radial disengagement in a direction opposite from the insertion direction.

It should be noted that the 0-rings 92 and 96 and the spacer 94 can be preassembled in the first housing 142 prior to insertion of the first housing 142 into the second housing 28. It should also be seen that flange 152 is able to be rotated 360° within the recess 106 in the second housing 28.

A top hat 154 includes an enlarged end flange 156 and a smaller diameter annular sleeve 158 projecting therefrom. The outer diameter of the sleeve 158 is sized to slide within the first bore portion of the first end portion 144 of the first housing 142 into engagement with the O-ring 96 thereby holding the O-rings 92 and 96 and the spacer 94 in position within the first bore portion of the first housing 142 as shown in Fig. 3.

In this position, a shoulder 160 formed on the top hat 154 between the flange 156 and the sleeve 158 is disposed adjacent the edge surface of the flange 152 on the first housing 142, by a small clearance therebetween and rotatably traps the flange 152 between the shoulder 160 and the inner edge of the ring member 60 adjacent to the recess 106. The flange 156 of the top hat 154 is dimensioned to have an interference fit with the bore 106 formed in the ring member 60 of the second housing 28 as shown in Fig. 3. The interference fit can be provided by a suitably sized outer diameter of the flange 156 or by means of radially outward projecting, deformable, ribs 162 disposed circumferentially about the peripheral side edge of the flange 156. The ribs 162 engage the inner surface of the ring member 60 in the second housing 28 and deform to press fit the top hat 154 in a position in the second housing 28 spaced by a small clearance from the flange 152 of the first housing 142. Thus, the first housing 142 is trapped within the second housing 28 by the interaction of the top hat 154 and the recess 106 in the second housing 28: yet is able to rotate through 360°. This allows transverse apertures 68 and 70 in the second housing 28 to be rotated to any position to allow easy access for insertion of or removal of a retainer 166 therefrom.

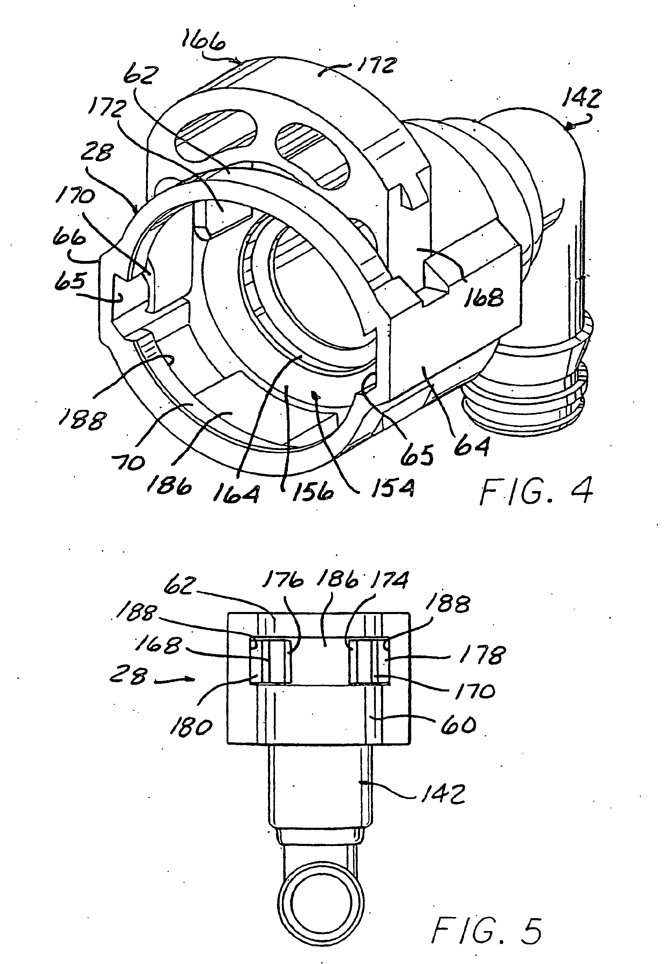

It should also be noted in Figs. 3 and 4 that an end portion of the flange 156 of the top hat 154 is provided with an annular recess 164. The outer diameter and the depth of the recess 164 are sized to receive the annular flange 22 on the first conduit 12 at a fully inserted position of the first conduit 12 in the joined first and second housings 142 and 28 as shown in Figs. 1 and 3.

The retainer 166 is similar to the retainer shown in US Patent No. 5,730,481 in that it includes a pair of legs 168 and 170 which depend from a central bight portion 172. Inwardly extending projections 174 and 176 have free ends movably spaced from the adjacent legs 168 and 170 and are dimensioned to slidingly engage and fit around the cylindrical portion of the first conduit 12 only when the first conduit 12 is fully inserted into the second housing 28. Outwardly extending projections 178 and 180 are formed on the lower portion of each leg 168 and 170 and are devised for engaging an edge of the grooves 65 in the side legs 64 and 66 of the second housing 28 in a partially inserted, shipping position shown in greater detail in Fig. 4, or a lower edge of the side legs 64 and 66 in the fully inserted position thereby locking the first conduit 12 in the joined first and second housings 142 and 28.

In this aspect of the invention, the retainer 166 does not have an undercut forming a surface which is adapted to engage the side surface of the enlarged flange 22 on the first conduit 12 when the first conduit 12 is fully inserted into the first and second housings 142 and 28. Rather, the interior portions of the retainer 166 are substantially flush with the side edges of the legs 168 and 170. However, it will be understood that the projections 174 and 176 will still resist full insertion of the retainer 166 into the second housing 28 if the first conduit 12 is not fully inserted into the first housing 142 since the enlarged flange 22 will be in an interference position with the projections 174 and 176.

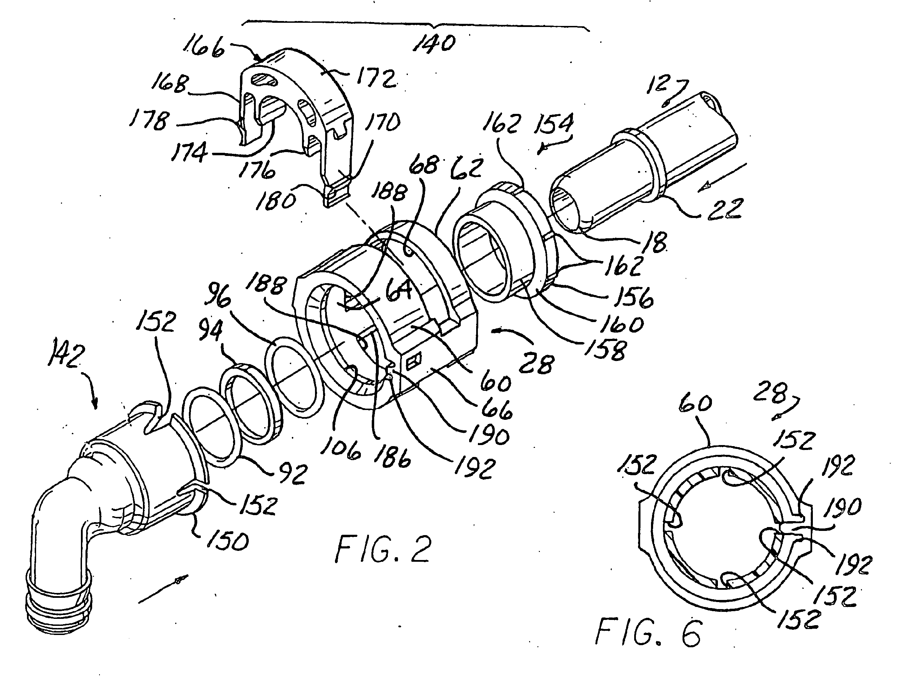

Several unique aspects of the connector 140 will now be described. As shown in Figs. 2 and 5, a web or flange 186 is formed in the first housing 142 between the first and second ring members 60 and 62. The flange 186 is preferably disposed in the transverse opening 70. The flange 186 divides the transverse opening 70 into two small slot-like apertures denoted by reference number 188. Each aperture 188 receives the lower end portion of the side legs 168 and 170 of the retainer 166, but will prevent a large amount of radially inward flexing of the lower end portions of the side legs 168 and 170 during removal of the retainer 166 from the second housing 28 which could cause breakage of the legs 168 and 170.

Fig. 4 also shows the longitudinally extending interior grooves 65 formed in each of the side legs 64 and 66 of the second housing 28. The grooves 65 receive the projections 178 and 180 on the side legs 166 and 170 of the retainer 166 in a snap-in connection to hold the retainer 166 in the partially inserted shipping position shown in Fig. 4.

The retainer 166 will remain in this shipping position that the retainer 166 will remain in during insertion of the first conduit 12 into the joined first and second housings 142 and 28. Only after the first conduit 12 has been fully inserted into the first housing 142 will the retainer 166 be able to be fully inserted through the transverse aperture 170 in the second housing 28 as described above.

Finally, as shown in Figs. 1 and 6, the connector 140 is provided with a unique indexing feature in which a radially inward extending projection 190 is formed adjacent one end of the second housing 28. The projection 190 has undercut side edges 192 which allow flexure of the projection 190.

The projection 190 is positioned to engage any of the slots 152 in the first housing 142 when the first housing 142 is rotatably mounted in the second housing 28 as described above. In this manner, the first housing 142 or the second housing 28 is rotatable relative to the other until the projection 190 engages one of the slots 152. Continued rotation of either the first housing 142 or the second housing 28 will cause the projection 190 to flex radially outward thereby disengaging from one of the slots 152 and allowing the projection 192 to slide along the exterior surface of the first end portion 144 of the first housing 142 until the projection 190 reaches and snaps into the next circumferentially adjacent slot 152. This provides a tactile feel to the installer to fix the relative angular positions of the first and second housings 142 and 28.

The slots 152 and the projection 190 could be reversed on the first and second housings 142 and 28 with the same effect.

In summary, there has been disclosed a unique rotatable quick connector having two rotatably interconnected, non-axially displaceable housings, one of which receives a retainer for lockingly connecting a first conduit in the joined housing portions for fluid communication with a sealed conduit sealingly mounted to the other housing portion. This arrangement enables the housing which receives the retainer to be rotated to a more convenient position for insertion or removal of the retainer from the housing. The rotatable aspects of the present invention may be applied to a number of different quick connector configurations.

The present invention, in different aspects, has a plurality of ribs or projections formed on the tip end of one housing which are forcibly engagable with the inner surface of the flexible conduit mounted thereover to prevent rotation between the tube and the housing.

In yet another aspect of the present invention, a cap having a smoothly curved or conical shaped outer end surface is fixedly mountable over the tip end of the female housing by means of an interlocking flange and recess formed on the tip end of the female housing and within the interior bore in the cap. The cap facilitates the easy sliding interconnecting of the tip end of the female housing and a flexible tube or conduit.

In another aspect, a web is formed in one of the transverse apertures in one housing to divide the aperture into two smaller apertures, each receiving one end portion of one side leg of the retainer. The web limits the amount of radially inward movement.of the ends of the side legs of the retainer during removal forces exerted on the side legs to release the retainer from the female housing. This prevents potential damage to the retainer; and, at the same time, does not interfere with the movement of the retainer between the normal insertion and storage positions in the housing.

Finally, in yet another aspect of the present invention, a top hat is mounted along with at least one seal element in the stepped bore in one housing. The top hat includes an end recess which receives the enlarged flange on the male conduit. In this manner, the retainer can be formed with flat side surfaces to engage the flange on the male conduit to prevent axial separation of the male conduit from the female housing.

## Claims

1. A quick connector (140) comprising
a male component (12) having an external flange (22) proximate to a first end;
a female component including a housing (28, 142) having a first axial bore extending between opposed first and second ends to receive the first end of the male component (12);
a transverse bore (68, 70) formed in the housing (28) intersecting the first axial bore; a retainer (166) received within the transverse bore (68, 70) of the housing (28), the retainer (166) having a pair of side legs (168, 170) and a pair of projections (174, 176) separated by an end wall (172), a first surface on each projection (174, 176) and the end wall (172) axially opposing the flange (22) on the male component (12) to prevent axial disengagement of the male component (12) from the first bore in the female component; a seal member (92, 94, 96) disposed in the first axial bore;
a top hat (154) disposed with an annular sleeve (158) in the axial bore axially adjacent to the seal member (92, 94, 96); and
an annular recess (164) extending inward from one end of the top hat (154) opening to the transverse bore (68, 70) in the housing (28) when the top hat (154) is mounted in the female component, the annular recess (164) being provided at an end portion of a flange (156) of the top hat (154) axially opposite from said seal member (92, 94, 96) and receiving the flange (22) of the male component when the male component (12) is fully inserted into the female component.

2. A quick connector (140) according to claim 1, wherein:
the axial length of the annular recess (164) in the top hat (154) is substantially equal to the axial length of the enlarged flange (22) on the male component (12) to substantially accommodate all of the enlarged flange (12) when the male component (12) is fully inserted in the annular recess (164) in the top hat (154).

3. The quick connector of claim 1 or 2 further comprising:
a web (186) extending axially through one of the opposed apertures (68, 70), the web (186) dividing the aperture (68, 70) into a pair of smaller apertures, each receiving an end portion of one leg (168, 170) of the retainer (166), the web (186) limiting the amount of inward flexing of the legs (168, 170) of the retainer (166) upon separation of the retainer (166) from the housing (28).

4. The quick connector of one of claims 1 to 3 further comprising:
a radially inward extending projection (190) at the connector (140) formed adjacent one end of the housing (28), the projection (190) preferable having undercut side edges (192) allowing flexure of the projection (190).

5. The quick connector of claim 4 further comprising:
a plurality of circumferentially spaced slots (152) formed in the housing (142), the projection (190) is positioned to engage any of the slots (152) when the housing (142) is rotatably mounted in the housing (28).

6. The quick connector of one of claims 1 to 5 wherein:
the side legs (168, 170) of the retainer (166) are straight and parallel to each other.

7. The quick connector of one of claims 1 to 6 wherein
the side legs (168, 170) of the retainer (166) have on their end joining the side wall (172) a projection.

8. The quick connector of claim 7 wherein
this projection and the projection (178, 180) have a distance corresponding to the width of the side leg (64, 66) of the housing (28).

## Patentansprüche

1. Schnellverbinder (140) mit:
einer steckbaren Komponente (12) mit einem äußeren Flansch (22) nahe einem ersten Ende;
einer aufnehmenden Komponente mit einem Gehäuse (28, 142) mit einer ersten axialen Bohrung, die sich zwischen gegenüberliegenden ersten und
zweiten Enden erstreckt, um das erste Ende der steckbaren Komponente (12) aufzunehmen;
einer im Gehäuse (28) gebildeten Querbohrung (68, 70), welche die erste axiale Bohrung schneidet;
einem Halteelement (166), das in der Querbohrung (68, 70) des Gehäuses (28) aufgenommen wird, wobei das Halteelement (166) ein Paar seitlicher Schenkel (168, 170) und ein Paar Vorsprünge (174, 176), die durch eine Abschlusswand (172) abgetrennt wird, besitzt, wobei eine erste Fläche auf jedem Vorsprung (174, 176) und die Abschlusswand (172) dem Flansch (22) auf der steckbaren Komponente (12) axial gegenüberstehen, um ein axiales Lösen der steckbaren Komponente (12) aus der ersten Bohrung in der aufnehmenden Komponente zu verhindern;
einem in der ersten axialen Bohrung angeordneten Dichtungselement (92, 94, 96);
einem Hutstück (154), das mit einer ringförmigen Hülse (158) in der axialen Bohrung an das Dichtungselement (92, 94, 96) axial angrenzend angeordnet ist;
einer ringförmigen Vertiefung (164), die von einem Ende des Hutstücks (154), sich zur Querbohrung (68, 70) im Gehäuse (28) öffnend, einwärts verläuft, wenn das Hutstück (154) in die aufnehmende Komponente montiert wird, wobei die ringförmige Vertiefung (164) mit einem Endteil eines Flansches (156) des Hutstücks (154) axial gegenüber dem Dichtungselement (92, 94, 96) versehen ist und den Flansch (22) der steckbaren Komponente aufnimmt, wenn die steckbare Komponente (12) vollständig in die aufnehmende Komponente gesteckt wird.

2. Schnellverbinder (140) gemäß Anspruch 1, bei dem:
die axiale Länge der ringförmigen Vertiefung (164) im Hutstück (154) im Wesentlichen gleich der axialen Länge des erweiterten Flansches (22) auf der steckbaren Komponente (12) ist, um im Wesentlichen den gesamten erweiterten Flansch (12) aufzunehmen, wenn die steckbare Komponente (12) vollständig in die ringförmige Vertiefung (164) im Hutstück (154) gesteckt wird.

3. Schnellverbinder gemäß Anspruch 1 oder 2, ferner mit:
einem Steg (186), der axial durch eine der gegenüberliegenden Öffnungen (68,70) verläuft, wobei der Steg (186) die Öffnung (68, 70) in ein Paar kleinerer Öffnungen teilt, von denen jede einen Endteil eines Schenkels (168, 170) des Halteelements (166) aufnimmt, wobei der Steg (186) den Betrag der Einwärtsbiegung der Schenkel (168, 170) des Halteelements (166) beim Trennen des Halteelements (166) vom Gehäuse (28) begrenzt.

4. Schnellverbinder gemäß einem der Ansprüche 1 bis 3, ferner mit:
einem radial einwärts verlaufenden Vorsprung (190) am Verbinder (140), der an ein Ende des Gehäuses (28) angrenzend gebildet wird, wobei der Vorsprung (190) vorzugsweise unterschnittene Seitenkanten (192) besitzt, die ein Biegen des Vorsprungs (190) erlauben.

5. Schnellverbinder gemäß Anspruch 4, ferner mit:
einer Vielzahl von am Umfang im Abstand angeordneten Schlitzen (152), die im Gehäuse (142) gebildet werden, wobei der Vorsprung (190) so angeordnet ist, dass er irgendeinen der Schlitze (152) ergreift, wenn das Gehäuse (142) im Gehäuse (28) drehbar montiert ist.

6. Schnellverbinder gemäß einem der Ansprüche 1 bis 5, bei dem:
die Seitenschenkel (168, 170) des Halteelements (166) gerade und parallel zu einander sind.

7. Schnellverbinder gemäß einem der Ansprüche 1 bis 6, bei dem die Seitenschenkel (168, 170) des Halteelements (166) auf ihren Ende, das an die Seitenwand (172) anliegt, einen Vorsprung haben.

8. Schnellverbinder gemäß Anspruch 7, bei dem
dieser Vorsprung und der Vorsprung (178, 180) einen Abstand haben, der der Breite des Seitenschenkels (64, 66) des Gehäuses (28) entspricht.

## Revendications

1. Raccord rapide (140) comprenant:
un composant mâle (12) ayant une bride externe (22) à proximité d'une première extrémité;
un composant femelle incluant un boîtier (28, 142) ayant un premier alésage axial s'étendant entre une première et une seconde extrémité opposée pour recevoir la première extrémité du composant mâle (12);
un alésage transversal (68, 70) formé dans le boîtier (28) et recoupant le premier alésage axial;
un élément de retenue (166) reçu dans l'alésage transversal (68, 70) du boîtier (28), l'élément de retenue (166) ayant une paire de pattes latérales (168, 170) et une paire de saillies (174, 176) séparées par une paroi terminale (172), une première surface sur chaque saillie (174, 176) et sur la paroi terminale (172) axialement à l'opposé de la bride (22) sur le composant mâle (12) pour empêcher un dégagement axial du composant mâle (12) depuis le premier alésage dans le composant femelle;
un élément d'étanchéité (92, 94, 96) disposé dans le premier alésage axial;
un chapeau supérieur (154) disposé dans un manchon annulaire (158) dans l'alésage axial et axialement adjacent à l'élément d'étanchéité (92, 94, 96); et
un évidement annulaire (164) s'étendant vers l'intérieur à partir d'une extrémité du chapeau supérieur (154), s'ouvrant vers l'alésage transversal (68, 70) dans le boîtier (28) quand le chapeau supérieur (154) est monté dans le composant femelle, l'évidement annulaire (164) étant prévu au niveau d'une portion terminale d'une bride (156) du chapeau supérieur (154) axialement à l'opposé dudit élément d'étanchéité (92, 94, 96) et recevant la bride (22) du composant mâle quand le composant mâle (12) est totalement inséré dans le composant femelle.

2. Raccord rapide (140) selon la revendication 1, dans lequel:
la longueur axiale de l'évidement annulaire (164) dans le chapeau supérieur (154) est sensiblement égale à la longueur axiale de la bride élargie (22) sur le composant mâle (12) pour loger sensiblement toute la bride élargie (12) quand le composant mâle (12) est entièrement inséré dans l'évidement annulaire (164) dans le chapeau supérieur (154).

3. Raccord rapide selon la revendication 1 ou 2, comprenant en outre:
une bande (186) s'étendant axialement à travers l'une des ouvertures opposées (68, 70), la bande (186) divisant l'ouverture (68, 70) en une paire d'ouvertures plus petites, chacune recevant une portion d'extrémité d'une patte (168, 170) de l'élément de retenue (166), la bande (186) limitant l'amplitude de flexion vers l'intérieur des pattes (168, 170) de l'élément de retenue (166) lors de la séparation de l'élément de retenue (176) depuis le boîtier (28).

4. Raccord rapide selon l'une des revendications 1 à 3, comprenant en outre:
une projection (190) s'étendant radialement vers l'intérieur au niveau du raccord (140) formé adjacent à une extrémité du boîtier (28), la projection (190) ayant de préférence des bords latéraux (192) en contre-dépouille, permettant une flexion de la projection (190).

5. Raccord rapide selon la revendication 4, comprenant en outre:
une pluralité de fentes (152) circonférentiellement espacées et formées dans le boîtier (142), la projection (190) étant positionnée pour engager l'une quelconque des fentes (152) quand le boîtier (142) est monté en rotation dans le boîtier (28).

6. Raccord rapide selon l'une des revendications 1 à 5, dans lequel:
les pattes latérales (168, 170) de l'élément de retenue (166) sont droites et parallèles les unes aux autres.

7. Raccord rapide selon l'une des revendications 1 à 6, dans lequel:
les pattes latérales (168, 170) de l'élément de retenue (166) comprennent une projection sur leur extrémité rejoignant la paroi latérale (172).

8. Raccord rapide selon la revendication 7, dans lequel
cette projection et la projection (178, 180) ont une distance qui correspond à la largeur de la patte latérale (64, 66) du boîtier (28).
